# EUROPEAN PATENT SPECIFICATION

(11) **EP 1 265 687 B1**
(45) Date of publication and mention of the grant of the patent: **16.06.2004**
(21) Application number: 01907918.5
(22) Date of filing: 28.02.2001
(51) Int. Cl.: B01D 39/08, B01D 39/20, B01D 53/02

(54) **COMBINED VAPOUR AND PARTICULATE FILTER**
KOMBINIERTES FILTER FÜR DÄMPFE UND PARTIKEL
FILTRE COMBINE A VAPEUR ET A PARTICULES

(30) Priority: 03.03.2000 GB 0005037
(43) Date of publication of application: 18.12.2002
(73) Proprietor: The Secretary of State of Defence, Salisbury, Wiltshire SP4 0JQ (GB)
(72) Inventor: CHINN, Matthew, Joseph, DSTL Porton Down, Wiltshire SP4 0JQ (GB); PEARS, Laurence, Anthony, DSTL Porton Down, Wiltshire SP4 0JQ (GB)
(74) Representative: Skelton, Stephen Richard
(86) International application number: PCT/GB2001/000836
(87) International publication number: WO 2001/066223

(56) References cited:
- US-A- 4 181 513
- US-A- 4 495 030
- US-A- 4 765 812
- US-A- 5 187 584
- DATABASE WPI Section Ch, Week 198733 Derwent Publications Ltd., London, GB; Class A97, AN 1987-231919 XP002165203 & JP 62 155914 A (TOYO ROSHI KK), 10 July 1987 (1987-07-10)
- DATABASE WPI Section Ch, Week 198506 Derwent Publications Ltd., London, GB; Class A88, AN 1985-034894 XP002165204 & JP 59 228918 A (TEIJIN LTD), 22 December 1984 (1984-12-22)

## Description

This invention relates to filter material and is concerned with both the production and use of the material.

Filter materials comprising several different fibre types of differing diameter are known. In particular, Database WPI Section Ch., Week 198733, AN 1987-231919 (Derwent Publications Ltd) discloses a filter material comprising 20 to 60% active carbon fibres of diameter less than 15 x 10⁻⁶ m, 10 to 20% ultra thin glass fibres of diameter 0.2 x 10⁻⁶ m and 20 to 70% cellulose fibres. Database WPI Section Ch., Week 198506, AN 1985-034894 (Derwent Publications Ltd) discloses a filter material comprising 20% K titanate fibres of diameter 0.1 to 0.3 x 10⁻⁶ m, 20% polyethylene terephthalate fibres of diameter 5 to 15 x 10⁻⁶ m and 20 % polyethylene terephthalate fibres of diameter 20 to 50 x 10⁻⁶ m. US 4 765 812 discloses a filter material comprising 10 to 20% of a binder material and 80 to 90% of a fibre mix comprising 75 to 95% wood or glass fibres of diameter greater than or equal to 20 x 10⁻⁶ m and 5 to 25% glass fibres of diameter less than 3 x 10⁻⁶ m.

The material according to the present invention is suitable for both particulate and vapour filtration. As used herein, the term ''vapour'' includes air and gases.

In a first aspect of the present invention, therefore, there is provided filter material suitable for both particulate and vapour filtration comprising a composite of first and second groups of fibres, the fibres of the first group having relatively large diameter of 6.0 to 14.0 x 10⁻⁶ m and the fibres of the second group having relatively small diameter of 0.1 to 1.0 x 10⁻⁶ m in which the fibres of both the first and second group comprise carbon fibres.

Typically, the fibres of the first group have diameter of about 7.0 x 10⁻⁶ m and the fibres of the second group have diameter of about 0.5 x 10⁻⁶ m.

Also typically, the composite material contains about 70% (by mass) of first group fibres.

In a second aspect, the present invention provides a method of producing a filter material of composite form suitable for both particulate and vapour filtration, comprising mixing together a first and second group of fibres in which the fibres of the first group have relatively large diameter of 6.0 to 14.0 x 10⁻⁶ m, the fibres of the second group have relatively small diameter of 0.1 to 1.0 x 10⁻⁶ m and the fibres of both the first and second group comprise carbon fibres.

The invention also comprises a filter material produced by the foregoing method.

Further, the invention also comprises a respirator provided with a filter unit incorporating the novel filter material.

The various aspects of the invention will now be described, by way of example only, with reference to the accompanying drawings in which
Figure 1 is a side view of a respirator provided with a filter unit;
Figure 2 is a cross section of the filter material employed by the filter unit;
Figure 3 is a flow chart illustrating the manufacturing steps in producing the filter material; and
Figures 4, 5 and 6 illustrate various forms of the filter material.

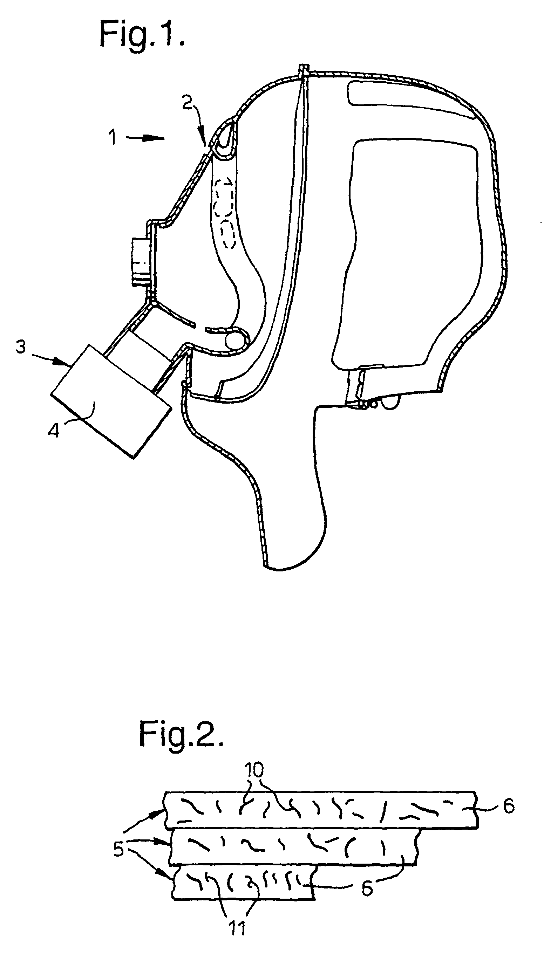

Figure 1 shows a personal respirator 1 of the form disclosed by GB 2 080 120 (Secretary of State for Defence) having a face mask 2, a filter unit 3 and a canister 4.

By the current invention, canister 4 houses contiguous layers 5 of filter material 6 according to the invention (Figure 2).

Filter material 6 is suitable for both particulate and vapour filtration, and comprises a composite of first and second groups 10, 11 of chopped fibres, the fibres of the first group 10 having a relatively large diameter (about 7.0 x 10⁻⁶ m) and the fibres of the second group having a relatively small diameter (about 0.5 x 10⁻⁶ m).

Preferred length of fibres are:
- First group: 1.0 to 6.0 mm
- Second group: 100 to 200 x 10⁻⁶ m.

First group fibres 10 of this example comprise Polyacrylonitrile (PAN) or pitch carbon fibres which have been activated by conventional steam or CO₂ activation methods so as to render them porous whereby they are capable of absorbing high boiling point (say > 50°C) vapours. These fibres have also been chemically treated with impregnants so as to render them capable of absorbing low boiling point (e.g. < 50°C) vapours. The fibres 10, which may be regarded as macrofibres, make up approximately 70% (by mass) of the composite material. The range of fibre mix may vary, with the fibres 10 of the first group ranging from 60 to 90% (by mass) and the fibres of the second group making up the remainder of the mass.

Fibres of the second group, which may be regarded as microfibres, comprise vapour grown carbon fibres.

The first group of fibres filters vapours and the second group of fibres filters particulates. By combining the two groups of fibres a combined vapour and particulate filter material results.

The dual role of the filter material results in a reduction in weight (when compared with conventional two filter units), as well as a reduction in breathing resistance, due to a lesser requirement for total filtration media.

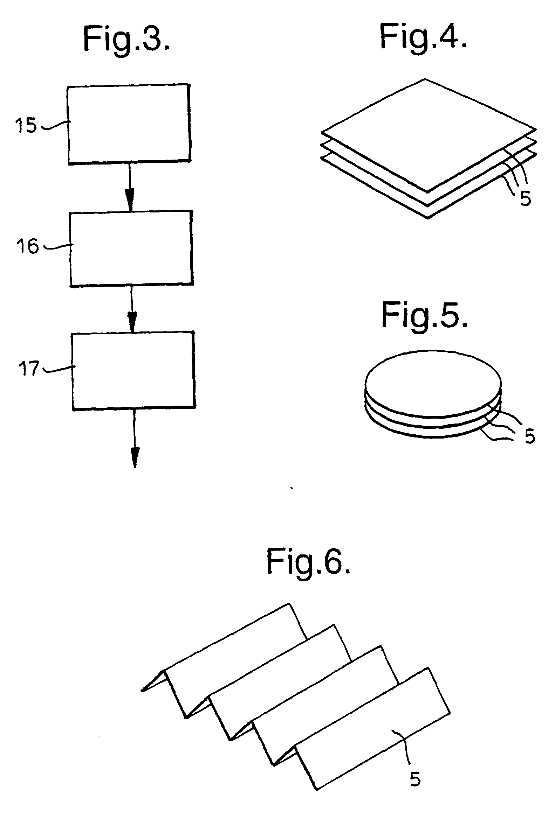

Figure 3 illustrates how the filter material is produced.

The desired portions of first and second groups of fibres are mixed in a mixing vessel 15 together with water, a soluble binder, such as sodium carboxymethyl cellulose or acrylic base binder and a viscosity modifier such as glycerol, which aids dispersion and ensures a substantially uniform mixture. The mixture is then passed to a sheet former 16, of the type used in the paper industry to make test samples. Water soluble binder (such as mentioned above) can be added to ensure that the subsequent composite has good mechanical properties.

If binder is added, the material is heated to 130 to 150 °C to cure the binder for 10 to 20 minutes.

Use of the former 16 results in composite material of mat form which is subsequently cut to size for incorporation as layers into the filter canister 4 of Figure 1, using cutter 17.

The composite material can be produced in mats of flat sheet form, such as rectangles (Figure 4) or discs (Figure 5). Alternatively, the mats may be pleated (Figure 6). The finished shapes are produced so as to allow ease of integration in the respirator system.

### Examples

### 1. PARTICULATE REMOVAL

A 25 g activated pitch carbon fibre mate has been produced that can remove 99.5% of NaCI particles (mean particle diameter 0.6 x 10⁻⁶ m) when tested at a face velocity of 30 cc/min. The associated pressure drop is low, 0.9 mm H₂O.

### 2. VAPOUR REMOVAL

Activated pitch carbon fibres tested against hexane (concentration 4000 mg/m³ at 1 1/min) in dry conditions (< 5% relative humidity) and dry sample. Weight of carbon fibres is 0.8 g in a 2.5 cm brass sample tube. One of the activated carbon fibres did not display any hexane breakthrough until 63 minutes.

## Claims

1. Filter material suitable for both particulate and vapour filtration comprising a composite of first and second groups of fibres, the fibres of the first group having relatively large diameter of 6.0 to 14.0 x 10⁻⁶ m and the fibres of the second group having relatively small diameter of 0.1 to 1.0 x 10⁻⁶ m in which the fibres of both the first and second group comprise carbon fibres.

2. Filter material according to Claim 1, in which the fibres of the first group have length ranging from 1.0 to 6.0 mm.

3. Filter material according to Claim 1 or Claim 2, in which the fibres of the second group have length ranging from 100 to 200 x 10⁻⁶ m.

4. Filter material according to Claims 1 to 3, in which the fibres of the first group are about 7.0 x 10⁻⁶ m in diameter.

5. Filter material according to Claims 1 to 4, in which the fibres of the second group are about 0.5 x 10⁻⁶ m in diameter.

6. Filter material according to Claims 1 to 5, in which the fibres of the first group range from 60 to 90 % by mass.

7. Filter material according to Claim 6, in which the fibres of the first group comprise approximately 70% by mass.

8. Filter material according to Claims 1 to 7, in which the fibres of the first group have been activated by conventional steam or CO₂ activation methods.

9. Filter material according to Claims 1 to 8, in which the fibres of the first group have been chemically treated with impregnants.

10. A method of producing filter material of composite form suitable for both particulate and vapour filtration, comprising mixing together a first and second group of fibres in which the fibres of the first group have relatively large diameter of 6.0 to 14.0 x 10⁻⁶ m, the fibres of the second group have relatively small diameter of 0.1 to 1.0 x 10⁻⁶ m and the fibres of both the first and second group comprise carbon fibres.

11. A method according to Claim 10, in which a binder is mixed with the first and second group of fibres.

12. A method according to Claim 10 or Claim 11, in which the material is produced as sheets and subsequently cut to size for incorporation as layers in a respirator system.

13. A respirator provided with a filter unit incorporating the filter material of any one of Claims 1 to 12.

## Patentansprüche

1. Filtermaterial, das sowohl für das Filtern von Partikeln als auch von Dämpfen geeignet ist und ein Verbundmaterial aus einer ersten und einer zweiten Fasergruppe aufweist, wobei die Fasern der ersten Gruppe einen relativ großen Durchmesser von 6,0 bis 14,0 x 10⁻⁶ m und die Fasern der zweiten Gruppe einen relativ kleinen Durchmesser von 0,1 bis 1,0 x 10⁻⁶ m besitzen und die Fasern sowohl der ersten als auch der zweiten Gruppe Kohlenstofffasern umfassen.

2. Filtermaterial nach Anspruch 1, wobei die Fasern der ersten Gruppe eine Länge von 1,0 bis 6,0 mm besitzen.

3. Filtermaterial nach Anspruch 1 oder Anspruch 2, wobei die Fasern der zweiten Gruppe eine Länge von 100 bis 200 x 10⁻⁶ m besitzen.

4. Filtermaterial nach den Ansprüchen 1 bis 3, wobei die Fasern der ersten Gruppe einen Durchmesser von etwa 7,0 x 10⁻⁶ m besitzen.

5. Filtermaterial nach den Ansprüchen 1 bis 4, wobei der Durchmesser der Fasern der zweiten Gruppe etwa 0,5 x 10⁻⁶ m beträgt.

6. Filtermaterial nach den Ansprüchen 1 bis 5, wobei die Fasern der ersten Gruppe 60 bis 90 Gew.-% ausmachen.

7. Filtermaterial nach Anspruch 6, wobei die Fasern der ersten Gruppe etwa 70 Gew.-% ausmachen.

8. Filtermaterial nach den Ansprüchen 1 bis 7, wobei die Fasern der ersten Gruppe durch ein herkömmliches Wasserdampf- oder CO₂-Aktivierungsverfahren aktiviert worden sind.

9. Filtermaterial nach den Ansprüchen 1 bis 8, wobei die Fasern der ersten Gruppe mit Imprägniermitteln chemisch behandelt worden sind.

10. Verfahren zur Herstellung eines Filtermaterials aus einem geformten Verbundmaterial, das sowohl für das Filtern von Partikeln als auch von Dämpfen geeignet ist, bei dem eine erste und eine zweite Fasergruppe vermischt werden, wobei die Fasern der ersten Gruppe einen relativ großen Durchmesser von 6,0 bis 14,0 x 10⁻⁶ m und die Fasern der zweiten Gruppe einen relativ kleinen Durchmesser von 0,1 bis 1,0 x 10⁻⁶ m besitzen und die Fasern sowohl der ersten als auch der zweiten Gruppe Kohlenstofffasern umfassen.

11. Verfahren nach Anspruch 10, wobei ein Bindemittel mit der ersten und der zweiten Fasergruppe vermischt wird.

12. Verfahren nach Anspruch 10 oder Anspruch 11, wobei das Material in Form von Lagen hergestellt und anschließend, um es schichtförmig in ein Atemschutzsystem einbauen zu können, auf Größe zugeschnitten wird.

13. Atemschutzvorrichtung, die mit einer Filterpatrone versehen ist, in welcher das Filtermaterial nach einem der Ansprüche 1 bis 12 eingebaut worden ist.

## Revendications

1. Matériau filtrant convenant aussi bien pour la filtration de particules que pour la filtration de vapeur comprenant un complexe constitué d'un premier et d'un second groupes de fibres, les fibres du premier groupe ayant un diamètre relativement grand de 6,0 à 14,0 x 10⁻⁶ m et les fibres du second groupe ayant un diamètre relativement petit de 0,1 à 1,0 x 10⁻⁶ m, dans lequel les fibres du premier et du second groupe comprennent des fibres de carbone.

2. Matériau filtrant selon la revendication 1, dans lequel les fibres du premier groupe ont une longueur allant de 1.0 à 6,0 mm.

3. Matériau filtrant selon la revendication 1 ou la revendication 2, dans lequel les fibres du second groupe ont une longueur allant de 100 à 200 x 10⁻⁶ m.

4. Matériau filtrant selon les revendications 1 à 3, dans lequel les fibres du premier groupe ont un diamètre d'environ 7,0 x 10⁻⁶ m.

5. Matériau filtrant selon les revendications 1 à 4, dans lequel les fibres du second groupe ont un diamètre d'environ 0,5 x 10⁻⁶ m.

6. Matériau filtrant selon les revendications 1 à 5, dans lequel les fibres du premier groupe constituent de 60 à 90% de la masse.

7. Matériau filtrant selon la revendication 6, dans lequel les fibres du premier groupe constituent environ 70% de la masse.

8. Matériau filtrant selon les revendications 1 à 7, dans lequel les fibres du premier groupe ont été activées par des méthodes conventionnelles d'activation à la vapeur ou au CO₂.

9. Matériau filtrant selon les revendications 1 à 8, dans lequel les fibres du premier groupe ont été traitées chimiquement avec des produits d'imprégnation.

10. Une méthode de production d'un matériau filtrant composé d'un complexe convenant aussi bien pour la filtration de particules que pour la filtration de vapeur, comprenant le mélange d'un premier et d'un second groupe de fibres, dans lequel les fibres du premier groupe ont un diamètre relativement grand de 6,0 à 14,0 x 10⁻⁶ m, les fibres du second groupe ont un diamètre relativement petit de 0,1 à 1,0 x 10⁻⁶ m et les fibres du premier et du second groupes comprennent des fibres de carbone.

11. Une méthode selon la revendication 10, dans laquelle un liant est mélangé aux fibres du premier et du second groupe de fibres.

12. Une méthode selon la revendication 10 ou 11, dans laquelle le matériau est produit sous forme de feuilles qui sont ensuite coupées à dimension pour incorporation sous forme de couches dans un système d'appareil respiratoire.

13. Un appareil respiratoire muni d'une unité filtrante intégrant le matériau filtrant de l'une des revendications 1 à 12.
